# EUROPEAN PATENT APPLICATION

(11) **EP 3 808 895 A1**
(43) Date of publication of application: **21.04.2021**
(21) Application number: 19820049.5
(22) Date of filing: 14.06.2019
(51) Int. Cl.: D07B 1/16, B60C 1/00, B60C 9/00, C08K 3/04, C08K 3/36, C08K 5/3415, C08L 21/00, D07B 1/06

(54) **METAL CORD-RUBBER COMPOSITE, BELT OR CARCASS FOR TIRE USING SAME, AND TIRE**

(30) Priority: 14.06.2018 JP 2018113671
(71) Applicant: Bridgestone Corporation, Chuo-Ku Tokyo 104-8340 (JP)
(72) Inventor: TAKEI, Kenichi, Tokyo 104-8340 (JP)
(74) Representative: Bardehle Pagenberg Partnerschaft mbB Patentanwälte Rechtsanwälte
(86) International application number: PCT/JP2019/023614
(87) International publication number: WO 2019/240252

(57) **Abstract**

Provided is a metal cord-rubber composite that is formed by coating a metal cord with a rubber composition, an N atom, a Cu atom, and a Zn atom being present on a metal cord surface, the metal cord surface having 2% by atom or more and 60% by atom or less of N atoms and a Cu/Zn ratio of 1 or greater and 4 or less, the rubber composition containing silica having a CTAB specific surface area of 170 m²/g or greater and carbon black, a total blended amount of the silica and the carbon black being 35 parts by mass to 100 parts by mass, and a blending ratio of the silica based on the total blended amount of the silica and the carbon black being 0.05 or greater and 0. 5 or less. The metal cord-rubber composite experiences no reduction in initial adhesiveness and has low loss properties. Also provided is a component or member for a tyre using the metal cord-rubber composite.

## Description

### Technical Field

The present invention relates to a metal cord-rubber composite suitable for rubber products, such as tyres for automobiles and heavy-duty vehicles, industrial belts such as conveyor belts, rubber crawlers, and hoses, which are required to have a certain toughness, and to a tyre.

### Background Art

In the related art, for rubber products, such as tyres for automobiles and heavy-duty vehicles, industrial belts such as conveyor belts, rubber crawlers, and hoses, which are required to have a certain toughness, to enhance toughness and durability by reinforcing a rubber, a metal cord-rubber composite has been used which is formed by coating a metal cord such as steel cord with a rubber composition. Herein, to allow the metal cord-rubber composite to exhibit high reinforcing effect, it is necessary to stably and strongly adhere the metal cord and the rubber composition.

For example, in the pneumatic tyre, which is a typical example of rubber products, the belt or carcass thereof employs a rubber composite formed by coating a steel cord formed from a single brass-plated steel wire or a twist of a plurality of brass-plated steel wires with a rubber composition, and reinforcement is achieved mainly by the steel cord. Furthermore, to apply the steel cord as a reinforcing material of a tyre, the steel cord and the coating rubber need to be securely adhered. To securely adhere with the coating rubber, plating of brass, which is a Cu/Zn alloy, is performed on a peripheral surface of the wire constituting the steel cord.

That is, so-called direct vulcanisation adhesion has been widely used, in which a metal cord such as a brass-plated steel cord is covered with a rubber composition containing sulphur and adhesion between the metal cord and the rubber composition is performed through a rubber-metal adhesion layer with CuₓS or the like formed therein, simultaneously with the vulcanisation of the rubber composition. Various studies have been made to enhance adhesiveness between a metal cord and a rubber by the direct vulcanisation adhesion.

To vulcanisation-mould a tyre within a certain time period, rate of adhesion between the cord and the rubber and sufficient adhesive strength by complete bonding between the cord and the rubber need to be ensured. That is, so-called initial adhesiveness is required. For example, a technique of adding a proper proportion of a cobalt-containing compound such as a Co salt or a nickel-containing compound such as an Ni salt as an adhesion promoter in a rubber and a technique of blending a high proportion of sulphur have been existed.

Furthermore, in the related art, as a component or member that forms a structure of a pneumatic tyre, a belt-like or cord-like metal-plated steel coated with a rubber composition has been used. Examples of the steel include carcasses using steel belts and steel cords.

A rubber composition for metal coating that coats the steel is required to have crack growth resistance to be used in a component or member to which a strong force is applied in the tyre structure because the rubber composition for metal coating that coats the steel can form a metal cord-rubber composite, which is an embodiment of the present invention.

In Patent Document 1, for example, a metal cord-rubber composite formed by coating a metal cord with a rubber composition, in which a surface of the metal cord has 2 to 60% by atom of N atoms, a Cu/Zn ratio is 1 to 4, and the rubber composition contains 1 to 60 parts by mass of silica per 100 parts by mass of a rubber component, 3 to 15% by mass of a silane coupling agent relative to the silica amount, and 0 to 1 part by mass of a cobalt-containing compound, has been known and various proposals have been made.

### Conventional art documents

### Patent documents

Patent Document 1: Publication of PCT International Application No. WO 2014/192811 (Claims, Examples, and others)

### Summary of the invention

### Problems to be solved by the invention

A case member of a pneumatic tyre, especially a metal cord-rubber composite such as belt coating rubber, is a member required to have a high durability for safety of a tyre. To meet the needs of further enhancement of fuel efficiency in recent year, enhancement of fuel efficiency by improving every component or member, in addition to treads, of a tyre is needed. The enhancement of fuel efficiency can be performed by enhancing low loss properties, that is, low heat build-up, of a rubber composition for metal coating used in a tyre. In particular, effect of enhancement of fuel efficiency by enhancing low heat build-up in a component or member of a heavy-duty tyre, such as truck and bus that travel for long distances, is remarkable. Meanwhile, needs for reducing a used amount of cobalt to reduce environmental load exist; however, when the cobalt amount is reduced, adhesiveness decreases and a modulus of elasticity of the rubber decreases, and thus there has been a problem in that fuel efficiency of a pneumatic tyre in a real car decreases. Means to solve problems

In light of the problems in the related art and existing circumstances, the present invention is to solve such problems, and an object of the present invention is to provide a metal cord-rubber composite that has low loss properties while initial adhesiveness of the metal cord-rubber composite to be used for a carcass or the like using a metal belt or metal cord is maintained, and a component or member of a tyre using the same.

Therefore, as a metal cord-rubber composite to solve the problems described above or the like, the metal cord-rubber composite of the present invention in which coating is performed with a rubber composition containing carbon black having a small CTAB specific surface area and silica having a large CTAB specific surface area has been completed.

In other words, the present invention resides in the following (1) to (7).
(1) A metal cord-rubber composite formed by coating a metal cord with a rubber composition,
   a surface of the metal cord having 2% by atom or more and 60% by atom or less of N atoms and a Cu/Zn ratio of 1 or greater and 4 or less,
   the rubber composition containing silica having a CTAB specific surface area of 170 m²/g or greater and carbon black,
   a total blended amount of the silica and the carbon black being 35 parts by mass or more and 100 parts by mass or less, and a blending ratio of the silica relative to the total blended amount of the silica and the carbon black being 0.05 or greater and 0.5 or less.
(2) The metal cord-rubber composite described in (1), where a content of cobalt is 1.0 part by mass or less based on 100 parts by mass of a rubber component.
(3) The metal cord-rubber composite described in (1) or (2), where a value of CTAB specific surface area of carbon black/CTAB specific surface area of silica is less than 0.5.
(4) The metal cord-rubber composite according to any one of (1) to (3), where a CTAB specific surface area of the carbon black is 90 m²/g or less.
(5) The metal cord-rubber composite described in any one of (1) to (4), where the rubber composition contains 0.05 parts by mass or more and 5.5 parts by mass or less of a bismaleimide compound.
(6) The metal cord-rubber composite described in any one of (1) to (5), where the blending ratio of the silica based on the total blended amount of the silica and the carbon black is 0.05 or greater and 0.16 or less.
(7) A belt or carcass for a tyre using the metal cord-rubber composite described in any one of (1) to (6).
(8) A tyre using the metal cord-rubber composite described in any one of (1) to (6).

### Effects of the invention

With the metal cord-rubber composite of the present invention, low loss properties represented by tan δ are not deteriorated and crack resistance can be enhanced although carbon black having a small CTAB specific surface area is contained.

### Embodiments of the invention

The metal cord-rubber composite of an embodiment of the present invention is a metal cord-rubber composite formed by coating a metal cord with a rubber composition, N atoms, Cu atoms, and Zn atoms being present on a metal cord surface, the metal cord surface having 2% by atom or more and 60% by atom or less of N atoms and a Cu/Zn ratio of 1 or greater and 4 or less, the rubber composition containing silica having a CTAB specific surface area of 170 m²/g or greater and carbon black, a total blended amount of the silica and the carbon black being 35 parts by mass or more and 100 parts by mass or less, and a blending ratio of the silica based on the total blended amount of the silica and the carbon black being 0.05 or greater and 0.5 or less. In the following description, unless otherwise noted, a numerical range includes a lower limit value and an upper limit value, the lower limit value or greater and the upper limit value or less, and is expressed as "the lower limit value to the upper limit value".

The blending ratio of the silica is not limited as long as the object of the present invention is not impaired but is preferably 0.05 to 0.16.

One embodiment of the metal cord-rubber composite of the present invention is a metal cord-rubber composite formed by coating a metal cord with a rubber composition.

The form of the coating is not particularly limited and, for example, thickness, shape, and protrusions and recesses can be properly selected depending on the use.

One embodiment of the metal cord-rubber composite of the present invention is a metal cord-rubber composite, in which a surface of the metal cord has 2 to 60% by atom of N atoms and the Cu/Zn ratio is 1 to 4.

In the present invention, by employing configurations of the embodiments described above, without blending cobalt, adhesiveness between the metal cord and the rubber is maintained and a metal-rubber composite having low loss properties is formed.

One embodiment of the metal cord-rubber composite of the present invention is a metal cord-rubber composite having a content of cobalt of 1.0 part by mass or less based on 100 parts by mass of the rubber component.

In the present invention, by employing configurations of the embodiments described above, the coating rubber can contain substantially no cobalt and, further, crack resistance can be enhanced.

One embodiment of the metal cord-rubber composite of the present invention is a metal cord-rubber composite having a value of CTAB specific surface area of carbon black/CTAB specific surface area of silica of less than 0.5.

In the present invention, by employing configurations of the embodiments described above, dispersion state of the silica and the carbon black in the rubber composition is improved. That is, a rubber composition with low heat build-up can be formed by using carbon black having a relatively large particle size and silica having a fine particle size together.

One embodiment of the metal cord-rubber composite of the present invention is a metal cord-rubber composite having the CTAB specific surface area of the carbon black is 90 m²/g or less.

One embodiment of the metal cord-rubber composite of the present invention is a metal cord-rubber composite, in which the rubber composition contains preferably 0.05 to 5.5 parts by mass, and more preferably 0.03 to 0.3 parts by mass, of a bismaleimide compound.

In the present invention, by employing configurations of the embodiments described above, initial adhesiveness between the metal cord and the coating rubber is enhanced.

One embodiment of the metal cord-rubber composite of the present invention is used in a belt or carcass for a tyre and forms a belt or carcass for a tyre that can achieve the effect of the metal cord-rubber composite of the present invention described above.

Another embodiment of the metal cord-rubber composite of the present invention is used in a tyre by being used as a component or member besides component or member described above and forms a tyre that can achieve the effect of the metal cord-rubber composite of the present invention described above.

The present invention will be specifically described below with reference to embodiments.

### [Metal cord]

For the metal cord used in the metal cord-rubber composite of the present invention, the twist structure may be any structure selected from a single-twisted structure, a multi-twisted structure, or a layer-twisted structure. That is, the twist structure may be a structure formed by twisting a plurality of metal wires, a structure formed from a single metal wire, or a structure formed by twisting after at least two layers are formed by winding around a periphery of a central part. The used metal wire is not particularly limited, and examples thereof include wires of iron, steel, especially stainless steel, lead, aluminium, copper, brass, bronze, Monel metal alloy, nickel, and zinc.

Furthermore, the metal wire preferably has a plating layer formed by an ordinary method on its surface. The plating layer is not particularly limited, and examples thereof include zinc plating layers, copper plating layers, brass plating layers, and three-component plating layers such as copper-cobalt-zinc plating. Among plating layers, from the perspectives of initial adhesiveness to the rubber composition, hygrothermal adhesiveness, and formation of a suitable rubber-metal adhesion layer, a brass plating layer is preferred.

A brass plating composition of a bulk constituting the brass plating layer preferably includes 40 to 80% by mass of copper; Cu and 20 to 60% by mass of zinc; Zn, and more preferably 55 to 70% by mass of Cu and 30 to 45% by mass of Zn, from the perspectives of metal cord processability and adhesiveness to the rubber.

Using a steel wire as an example of the metal wire, details will be further described below. The steel wire is steel, that is, a wire-like metal formed from iron as a main component, that is, the mass of the iron relative to the total mass of the metal steel wire is greater than 50% by mass. The metal may contain another metal besides the iron described above.

From the perspectives of workability and durability, the steel wire preferably has a wire diameter from 0.1 to 5.5 mm, and more preferably 0.15 to 5.26 mm. Herein, "wire diameter of a steel wire" refers to a largest length between two points on the circumference of a cross-sectional shape perpendicular to the axis of the steel wire. The cross-sectional shape perpendicular to the axis of the steel wire is not particularly limited and may be circular, elliptical, rectangular, triangular, or polygonal, but is typically circular. Note that, in the case where a steel cord, which is a metal reinforcing cord formed by twisting the steel wires, is used for a carcass or belt of a tyre, the cross-sectional shape of the steel wire is preferably circular and the wire diameter is preferably 0.1 to 0.5 mm. In the case where the steel cord is used for a bead core of a tyre, the cross-sectional shape is, similarly, preferably circular and the wire diameter is preferably from 1 to 1.5 mm. Furthermore, the steel wire preferably has a brass plating layer having the composition described above on its surface, and in the metal cord-rubber composite of the present invention, plating containing particular metal components is performed. The thickness of the plating layer is not particularly limited and, for example, is typically from 100 to 300 nm.

In the present invention, for example, a metal cord formed from a steel cord can be obtained by an ordinary method, in which a plurality of metal wires such as steel wires having brass plating on the peripheral surface thereof, is twisted into, for example, a 1×3 structure or a 1×5 structure.

The metal cord suitable for rubber product reinforcement, such as the steel cord, is preferably at least one selected from the group consisting of a belt cord, a carcass cord, and a bead cord for a tyre.

### [Surface of metal cord]

In the present invention, "surface" is a surface layer region up to 5 nm depth inward of a metal wire such as a steel wire in its radius direction. The measurement of N atoms and the measurement of the Cu/Zn ratio of the surface of the metal cord are performed by measuring the surface of the metal cord before coating with a rubber composition after obtaining the metal cord and performing washing treatment, drying, and the like as necessary.

Furthermore, in the present invention including examples described below, the measurement of the N atoms of the surface of the metal cord is performed by measuring N atoms of the surface of the metal cord by X-ray Photoelectron Spectroscopy: XPS, and the measurement of the Cu/Zn ratio of the surface of the metal cord is performed by measuring the Cu/Zn ratio of the surface of the metal cord by the photoelectron spectroscopy.

### [N atom of surface of metal cord]

The N atoms of the metal cord surface may be contained in the metal or may be contained in a substance attached or bonded to the metal surface.

In the present invention, the surface of the metal cord has 2 to 60% by atom of nitrogen; N atoms from the perspective of a treat leaving property, that is, adhesiveness after the metal cord is coated with a coating rubber and left.

### [Cu atom and Zn atom of surface of metal cord]

In the present invention, the surface of the metal cord has Cu atoms and Zn atoms that are originally contained in a base material metal or that are present due to treatment, such as plating, and the Cu/Zn ratio, in terms of mass, has to be 1 to 4. Preferably, the surface of the metal cord has 2.1 to 55.0% by atom of N atoms and the Cu/Zn ratio is desirably 1.1 to 3.5.

By setting the proportion of the N atoms of the surface of the metal cord to 2% by atom or greater, the effect of the present invention can be sufficiently achieved, and a treat leaving property is also exhibited. By setting the Cu/Zn ratio of the surface of the metal cord to 1 to 4, the effect of the present invention can be sufficiently achieved, and excellent initial adhesiveness is achieved.

In the present invention, adjustment of the nitrogen; N atoms of the surface of the metal cord to 2 to 60% by atom can be performed by, for example, suitably combining treatments by a triazole compound (corrosion inhibitor), specifically surface treatments in which a triazole compound is brought into contact with an aqueous solution. Furthermore, adjustment of the Cu/Zn ratio of the surface of the metal cord to 1 to 4 can be performed by, for example, treatment that suitably combines pH of an acidic buffer solution and a concentration of a triazole aqueous solution. A lower pH results in obtaining a metal cord having a higher Cu/Zn ratio.

### [Rubber composition for metal cord coating]

The rubber composition used in a coating rubber of the metal cord-rubber composite of the present invention contains silica and carbon black in addition to a rubber component including, for example, natural rubber and/or synthetic diene rubber.

### [Rubber component]

The rubber component of the rubber composition used in the coating rubber is not particularly limited, and examples thereof include natural rubber, and diene rubbers, such as polybutadiene rubber, polyisoprene rubber, styrene-butadiene copolymer rubber, acrylonitrile-butadiene copolymer rubber, ethylene-propylene copolymer rubber, ethylene-propylene-diene terpolymer rubber, butyl rubber, halogenated butyl rubber, alkylchlorosulfonated polyethylene rubber, isobutylene-isoprene copolymer rubber, and polychloroprene rubber. One of the rubber components may be used alone, or a plurality of the rubber components may be used in combination.

The other rubber components are not particularly limited as long as the other rubber components are rubbers used in rubber products, such as tyres and industrial belts.

### [Natural rubber]

Examples of the natural rubber; NR contained in the rubber component of the rubber composition for metal coating according to an embodiment of the present invention include viscosity stabiliser-containing natural rubber, highly-purified natural rubber, enzyme-treated natural rubber, and saponified natural rubber, in addition to RSS, TSR#10, and TSR#20 that are typically used for tyres. Examples of the viscosity stabiliser include hydroxylamine sulphate, semicarbazide; NH₂CONHNH₂, or salts thereof, hydroxylamine, and hydrazide compounds such as propionyl hydrazide. The highly-purified natural rubber is natural rubber obtained by, for example, subjecting natural rubber latex to centrifugal separation to remove non-rubber component, such as protein. The enzyme-treated natural rubber is natural rubber that is enzyme-treated by an enzyme such as protease, lipase, or phospholipase. The saponified natural rubber is a natural rubber that is saponified by, for example, a base such as NaOH.

In the present application, the CTAB specific surface area is a specific surface area when CTAB (cetyltrimethylammonium bromide) is adsorbed on a surface of carbon black or silica, that is, a specific surface area expressed by surface area per unit weight. Measurement can be performed in accordance with JIS K 6217-3 (2001) in the case of carbon black. Measurement can be performed in accordance with JIS 6430 (2008) in the case of silica. The unit is m²/g.

Furthermore, the nitrogen adsorption specific surface area; N₂SA of the carbon black is determined in accordance with Method A of JIS K 6217-2:2001; Determination of specific surface area - Nitrogen adsorption methods - Single-point procedures. Furthermore, the dibutyl phthalate oil absorption; DBP oil absorption of the carbon black can be determined by JIS K 6217-4:2001; Determination of oil absorption number.

### [Carbon Black]

In the rubber composition used in the present invention, carbon black is blended in an amount of 20 parts by mass or more, more preferably 25 parts by mass or more, and even more preferably 30 parts by mass or more, and 100 parts by mass or less, preferably 80 parts by mass or less, and even more preferably 70 parts by mass or less, per 100 parts by mass of the rubber component described above. Note that, from the perspective of maintaining heat build-up, 100 parts by mass or less is preferred.

The rubber composition for metal coating of the present invention contains silica and carbon black. The silica that can be used in the rubber composition has the CTAB specific surface area of 170 m²/g or greater. Furthermore, the carbon black has the CTAB specific surface area of preferably 90 m²/g or less, and more preferably 85 m²/g or less. A rubber composition with low heat build-up can be formed by using carbon black having a relatively large particle size and silica having a fine particle size together. In the case where the value of CTAB specific surface area of carbon black/CTAB specific surface area of silica is less than 0.5, or more preferably 0.45 or less, the particle size of the carbon black is larger than the particle size of the silica.

The lower limit value of the CTAB specific surface area of the carbon black is not particularly limited but is preferably 30 m²/g or greater.

The lower limit value of the value of CTAB specific surface area of carbon black/CTAB specific surface area of silica is not particularly limited but is preferably 0.1 or greater, and more preferably 0.2 or greater.

The type of the carbon black is not particularly limited as long as the CTAB specific surface area is within the range described above, and examples thereof include GPF, FEF, HAF, ISAF, and SAF.

Furthermore, the nitrogen adsorption specific surface area; N₂SA of the carbon black is preferably 70 m²/g or greater. By setting the N₂SA of the carbon black to 70 m²/g or greater, fracture resistance and crack resistance of the crosslinked rubber and the tyre can be further enhanced. Furthermore, the N₂SA of the carbon black is preferably 140 m²/g or less. By setting to 140 m²/g or less, excellent dispersibility of the carbon black in the rubber composition can be achieved.

Furthermore, the dibutyl phthalate oil absorption; DBP oil absorption is preferably 70 mL/100 g or greater. By setting the DBP oil absorption of the carbon black to 70 mL/100 g or greater, fracture resistance and crack resistance of the crosslinked rubber and the tyre can be further enhanced.

Furthermore, from the perspective of processability of the rubber composition, the DBP oil absorption of the carbon black is preferably 140 mL/100 g or less.

The rubber composition used in the present invention contains carbon black. The carbon black can be appropriately selected from the carbon black typically used in rubber industries, and the type or grade is not limited. Examples thereof include SRF, GPF, FER, HAF, and ISAF.

### [Silica]

The silica that can be used in the present invention is not particularly limited, and silica that is used in a commercially available rubber compositions can be used. In particular, for example, wet silica (hydrous silicic acid), dry silica (silicic anhydride), and colloidal silica can be used. Particularly preferred silica is silica having a BET specific surface area from 50 to 400 m²/g. Note that, in the present invention, the BET specific surface area is measured by one point value of the BET method.

The blended amount of the silica is not particularly limited as long as the object of the present invention, such as suppression of crack growth and enhancement of heat resistant adhesiveness, is not inhibited and is 1 part by mass or greater, and preferably 3 parts by mass or greater, and 40 parts by mass or less, preferably 20 parts by mass or less, and more preferably 10 parts by mass or less, based on 100 parts by mass of the rubber component.

### [Total number of parts of blended silica and carbon black as well as blending ratio of silica relative to the same]

In the rubber composition of the present invention, the silica and the carbon black are blended in a total amount from 35 to 100 parts by mass, and preferably 40 to 70 parts by mass, based on 100 parts by mass of the rubber component.

By blending in the range, increase of heat build-up when a filler is blended is suppressed, and low heat build-up can be maintained. Furthermore, by setting the total number of parts of the blended silica and carbon black to the range described above, performances, such as wear resistance, can be enhanced while low heat build-up is maintained.

In the rubber composition of the present invention, the ratio of the number of parts of the blended silica relative to the total number of parts of the blended silica and carbon black is 0.05 to 0.5, and preferably 0.05 to 0.16.

By blending an appropriate amount of the carbon black within this range, heat build-up can be suppressed.

In the present invention, a silane coupling agent may be used. The silane coupling agent used in the rubber composition of the present invention is not particularly limited but is preferably at least one compound selected from the group consisting of compounds represented by General Formulas (I) to (IV) below. By using such silane coupling agents, growth of crack can be further suppressed, and heat resistant adhesiveness can be further enhanced.
General Formulas (I) to (IV) are described one by one below.

**(R⁴O)_{3-*p*}R²*ₚ*Si-R³-S*_{q}*-R³-Si(OR¹)_{3-*r*}R²*ᵣ* · · · ·** **(I)**

In Formula (I) above, R¹ moieties may be the same or different and are each a linear, cyclic, or branched alkyl group having 1 to 8 carbons or a linear or branched alkoxyalkyl group having 2 to 8 carbons, R² moieties may be the same or different and are each a linear, cyclic, or branched alkyl group having 1 to 8 carbons, R³ moieties may be the same or different and are each a linear or branched alkylene group having 1 to 8 carbons, q has an average value 2 to 6, and p and r may be the same or different and each have an average value from 0 to 3; however, p and r are not simultaneously 3.

Examples of the silane coupling agent represented by General Formula (I) above include bis(3-triethoxysilylpropyl)tetrasulphide, bis(3-trimethoxysilylpropyl)tetrasulphide, bis(3-methyldimethoxysilylpropyl)tetrasulphide, bis(2-triethoxysilylethyl)tetrasulphide, bis(3-triethoxysilylpropyl)disulphide, bis(3-trimethoxysilylpropyl)disulphide, bis(3-methyldimethoxysilylpropyl)disulphide, bis(2-triethoxysilylethyl)disulphide, bis(3-triethoxysilylpropyl)trisulphide, bis(3-trimethoxysilylpropyl)trisulphide, bis(3-methyldimethoxysilylpropyl)trisulphide, bis(2-triethoxysilylethyl)trisulphide, bis(3-monoethoxydimethylsilylpropyl)tetrasulphide, bis(3-monoethoxydimethylsilylpropyl)trisulphide, bis(3-monoethoxydimethylsilylpropyl)disulphide, bis(3-monomethoxydimethylsilylpropyl)tetrasulphide, bis(3-monomethoxydimethylsilylpropyl)trisulphide, bis(3-monomethoxydimethylsilylpropyl)disulphide, bis(2-monoethoxydimethylsilylethyl)tetrasulphide, bis(2-monoethoxydimethylsilylethyl)trisulphide, bis(2-monoethoxydimethylsilylethyl)disulphide, and bis(3-triethoxysilylethyl)polysulphide (q = 2.1, q = 2.5, q = 3.75). 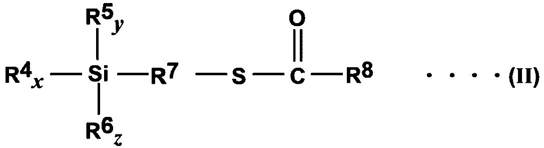 In Formula (II) above, R⁴ is a monovalent group selected from the group consisting of -Cl, -Br, R⁹O-, R⁹C(=O)O-, R⁹R¹⁰C=NO-, R⁹R¹⁰CNO-, R⁹R¹⁰N-, and -(OSiR⁹R¹⁰)ₕ(OSiR⁹R¹⁰R¹¹) (R⁹, R¹⁰, and R¹¹ may be the same or different and are each a hydrogen atom or a monovalent hydrocarbon group having 1 to 18 carbons, and h has an average value from 1 to 4), R⁵ is R⁴, a hydrogen atom, or a monovalent hydrocarbon group having 1 to 18 carbons, R⁶ is R⁴, R⁵, a hydrogen atom, or a - [O(R¹²O)ⱼ]_{0.5}- group (R¹² is an alkylene group having 1 to 18 carbons, j is an integer from 1 to 4), R⁷ is a divalent hydrocarbon group having 1 to 18 carbons, R⁸ is a monovalent hydrocarbon group having 1 to 18 carbons, and x, y, and z are each a number satisfying the relationships x + y + 2z = 3, 0 ≤ x ≤ 3, 0 ≤ y ≤ 2, and 0 ≤ z ≤ 1.

In General Formula (II) above, R⁸, R⁹, R¹⁰, and R¹¹ may be the same or different and are each preferably a group selected from the group consisting of linear, cyclic, or branched alkyl groups having 1 to 18 carbons, alkenyl groups, aryl groups, and aralkyl groups . Furthermore, in the case where R⁵ is a monovalent hydrocarbon group having 1 to 18 carbons, a group selected from the group consisting of linear, cyclic, or branched alkyl groups, alkenyl groups, aryl groups, and aralkyl groups is preferred. R¹² is preferably a linear, cyclic, or branched alkylene group, and particularly preferably a linear alkylene group. Examples of R⁷ include alkylene groups having 1 to 18 carbons, alkenylene groups having 2 to 18 carbons, cycloalkylene groups having 5 to 18 carbons, cycloalkylalkylene groups having 6 to 18 carbons, arylene groups having 6 to 18 carbons, and aralkylene groups having 7 to 18 carbons. The alkylene groups and the alkenylene groups may each be any of linear or branched, and the cycloalkylene groups, the cycloalkylalkylene groups, the arylene groups, and the aralkylene groups may each have a substituent such as a simple alkyl group on their ring. The R⁷ is preferably an alkylene group having 1 to 6 carbons, and particularly preferably a linear alkylene group, and preferred examples thereof include a methylene group, an ethylene group, a trimethylene group, a tetramethylene group, a pentamethylene group, and a hexamethylene group.

In General Formula (II) above, specific examples of the monovalent hydrocarbon group having 1 to 18 carbons of R⁵, R⁸, R⁹, R¹⁰, and R¹¹ include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group. In General Formula (II) above, examples of R¹² include a methylene group, an ethylene group, a trimethylene group, a tetramethylene group, a pentamethylene group, a hexamethylene group, an octamethylene group, a decamethylene group, and a dodecamethylene group.

Examples of the silane coupling agent represented by General Formula (II) above include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among the silane coupling agents, 3-octanoylthiopropyltriethoxysilane [manufactured by Momentive Performance Materials, "NXT silane" (trade name)] is particularly preferred.

**(R¹³O)*₃₋ₛ*R¹4*ₛ*Si-R¹⁵-S*ₖ*-R¹⁶-S*ₖ*-R¹⁵-Si(OR¹³)*₃₋ₜ*R¹⁴*ₜ* · · ·** **(III)**

**here R¹⁶** = **-S-R¹⁷-S-, -R¹⁸-S*ₘₗ*-R¹⁹-, -R²⁰-S*ₘ₂*-R²¹-S*ₘ₃*-R²²-**

In Formula (III) above, R¹³ moieties may be the same or different and are each a linear, cyclic, or branched alkyl group having 1 to 8 carbons or a linear or branched alkoxyalkyl group having 2 to 8 carbons, R¹⁴ moieties may be the same or different and are each a linear, cyclic, or branched alkyl group having 1 to 8 carbons, R¹⁵ moieties may be the same or different and are each a linear or branched alkylene group having 1 to 8 carbons, R¹⁶ is any divalent group selected from the group consisting of General Formulas (-S-R¹⁷-S-), (-R¹⁸-Sₘ₁-R¹⁹-), and (-R²⁰-Sₘ₂-R²¹-Sₘ₃-R²²-) (R¹⁷ to R²² may be the same or different and are each a divalent hydrocarbon group having 1 to 20 carbons, a divalent aromatic group, or a divalent organic group containing a hetero element except sulphur and oxygen, m1, m2, and m3 may be the same or different and each have an average value of 1 or greater and less than 4), k may be the same or different and each have an average value from 1 to 6, and s and t may be the same or different and each have an average value from 0 to 3; however, s and t are not simultaneously 3.

As the specific examples of the silane coupling agent (C) represented by General Formula (III) above, compounds represented by
an average composition formula

(CH₃CH₂O)₃Si-(CH₂)₃-S₂-(CH₂)₆-S₂-(CH₂) ₃-Si(OCH₂CH₃)₃,

an average composition formula

(CH₃CH₂O)₃Si-(CH₂)₃-S₂₋(CH₂)₁₀-S₂-(CH₂)₃-Si(OCH₂CH₃)₃,

an average composition formula

(CH₃CH₂O)₃Si-(CH₂)₃-S₃-(CH₂)₆-S₃-(CH₂)₃-Si(OCH₂CH₃)₃,

an average composition formula

(CH₃CH₂O)₃Si-(CH₂)₃-S₄-(CH₂)₆-S₄-(CH₂)₃-Si(OCH₂CH₃)₃,

an average composition formula

(CH₃CH₂O)₃Si-(CH₂)₃-S-(CH₂)₆-S₂-(CH₂)₆-S-(CH₂)₃-Si(OCH₂CH₃)₃,

an average composition formula

(CH₃CH₂O)₃Si-(CH₂)₃-S-(CH₂)₆-S_{2.5}-(CH₂)₆-S-(CH₂)₃-Si(OCH₂CH₃)₃,

an average composition formula

(CH₃CH₂O)₃Si-(CH₂)₃-S-(CH₂)₆-S₃-(CH₂)₆-S-(CH₂)₃-Si(OCH₂CH₃)₃,

an average composition formula

(CH₃CH₂O)₃Si-(CH₂)₃-S-(CH₂)₆-S₄-(CH₂)₆-S-(CH₂)₃-Si(OCH₂CH₃)₃,

an average composition formula

(CH₃CH₂O)₃Si-(CH₂)₃-S-(CH₂)₁₀-S₂-(CH₂)₁₀-S-(CH₂)₃-Si(OCH₂CH₃)₃,

an average composition formula

(CH₃CH₂O)₃Si-(CH₂)₃-S₄-(CH₂)₆-S₄-(CH₂)₆-S₄-(CH₂)₃-Si(OCH₂CH₃)₃,

an average composition formula

(CH₃CH₂O)₃Si-(CH₂)₃-S₂-(CH₂)₆-S₂-(CH₂)₆-S₂-(CH₂)₃-Si(OCH₂CH₃)₃,

and
an average composition formula

(CH₃CH₂O)₃Si-(CH₂)₃-S-(CH₂)₆-S₂-(CH₂)₆-S₂-(CH₂)₆-S-(CH₂) ₃-Si(OCH ₂CH₃)₃

are preferred. 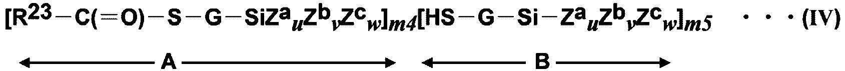 In Formula (IV) above, R²³ is a linear, branched, or cyclic alkyl group having 1 to 20 carbons, G moieties may be the same or different and are each an alkanediyl group having 1 to 9 carbons or alkenediyl group, Z^{a} moieties may be the same or different, are each a group that can be bonded with two silicon atoms, and are each a group selected from the group consisting of [-O-]_{0.5}, [-O-G-]_{0.5}, or [-O-G-O-]_{0.5}, Z^{b} moieties may be the same or different, are each a group that can be bonded with two silicon atoms, and are each a functional group represented by [-O-G-O-]_{0.5}, Z^{c} moieties may be the same or different and are each a functional group represented by -Cl, -Br, -OR^{a}, R^{a}C(=O)O-, R^{a}R^{b}C=NO-, R^{a}R^{b}N-, R^{a}-, and HO-G-O- (G is identical with the description above), R^{a} and R^{b} may be the same or different and are each a linear, branched, or cyclic alkyl group having 1 to 20 carbons. m4, m5, u, v, and w may be the same or different and satisfy 1 ≤ m4 ≤ 20, 0 ≤ m5 ≤ 20, 0 ≤ u ≤ 3, 0 ≤ v ≤ 2, 0 ≤ w ≤ 1, and (u/2) + v + 2w = 2 or 3. In the case where a plurality of A parts exist, Z^{a}ᵤ moieties, Z^{b}ᵥ moieties, and Z^{c}_{w} moieties in the plurality of A parts may be each the same or different, and in the case where a plurality of B parts exist, Z^{a}ᵤ moieties, Z^{b}ᵥ moieties, and Z^{c}_{w} moieties in the plurality of B parts may be each the same or different.

Specific examples of the silane coupling agent represented by General Formula (IV) above include Chemical Formula (V), Chemical Formula (VI), and Chemical Formula (VII) shown below. 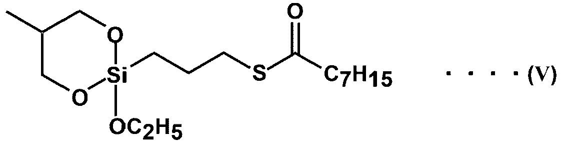 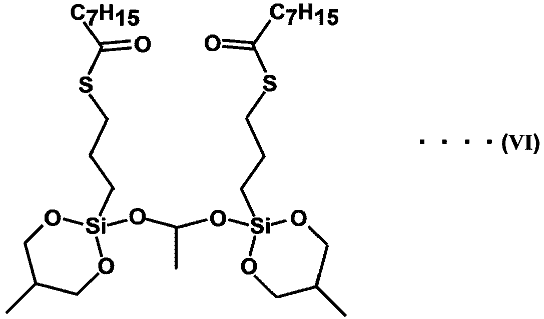 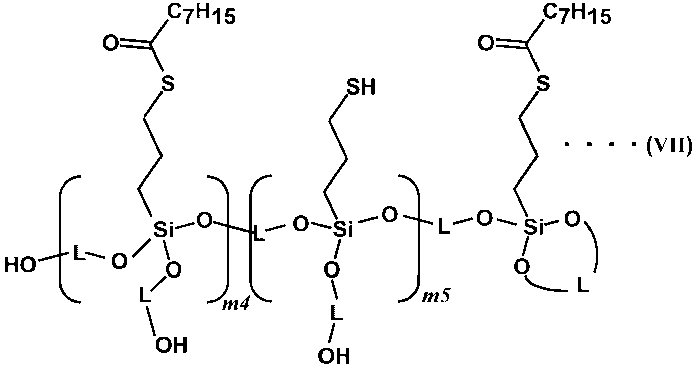 In the formulas, L moieties are each independently an alkanediyl group or alkenediyl group having 1 to 9 carbons.

As the silane coupling agent represented by Chemical Formula (V) above, trade name "NXT Low-V Silane" manufactured by Momentive Performance Materials is available as a commercially available product.

Furthermore, as the silane coupling agent represented by Chemical Formula (VI) above, trade name "NXT Ultra Low-V Silane" manufactured by Momentive Performance Materials is similarly available as a commercially available product. Furthermore, an example of the silane coupling agent represented by Chemical Formula (VII) is trade name "NXT-Z" manufactured by Momentive Performance Materials.

In the present invention, among the compounds represented by General Formulas (I) to (IV) above, the silane coupling agent is particularly preferably a compound represented by General Formula (I) above from the perspectives of cost and exhibition of further effect of the present invention.

In the present invention, one of the silane coupling agents may be used alone, or a plurality of the silane coupling agents may be used in combination.

The blended amount in the case of blending such a silane coupling agent is 3 to 15% by mass, and preferably 5 to 15% by mass, based on the silica amount.

By setting the blended amount of the silane coupling agent to from 3 to 15% by mass, reduction of crack growth resistance can be suppressed.

### [Bismaleimide compound]

In the metal cord-rubber composite of the present invention, the rubber composition may contain a bismaleimide compound to, for example, enhance heat resistance of the rubber composition.

Examples of the bismaleimide compound include N,N'-o-phenylene bismaleimide, N,N'-m-phenylene bismaleimide, N,N'-p-phenylene bismaleimide, N,N'-(4,4'-diphenylmethane) bismaleimide, 2,2-bis-[4-(4-maleimidephenoxy)phenyl]propane, and bis(3-ethyl-5-methyl-4-maleimidephenyl)methane. In the present invention, examples include N,N'-m-phenylene bismaleimide and N,N'-(4,4'-diphenylmethane) bismaleimide. One of the bismaleimide compounds may be used alone, or a plurality of the bismaleimide compounds may be used in combination. The content of the bismaleimide compound is preferably 0.05 to 5.5 parts by mass, and more preferably 0.3 to 3.0 parts by mass, based on 100 parts by mass of the rubber component. By blending the bismaleimide compound within the content range, in addition to enhancement of crack resistance, a rubber composition having enhanced thermal aging resistance, tensile properties such as compression set characteristics, elongation, and strength, and durability can be obtained.

### <Vulcanisation accelerator>

The type of the vulcanisation accelerator contained in the rubber composition according to the present invention is not particularly limited, and examples thereof include vulcanisation accelerators, such as guanidine compounds, aldehyde-amine compounds, aldehyde-ammonia compounds, thiazole compounds, sulfenamide compounds, thiourea compounds, dithiocarbamate compounds, and xanthate compounds. One of the vulcanisation accelerators may be used alone, or two or more of the vulcanisation accelerators may be used in combination. Furthermore, among the vulcanisation accelerators described above, from the perspective of making the strength after the vulcanisation of the rubber composition even higher, use of the vulcanisation accelerator of the sulfenamide compound is preferred.

Examples of the vulcanisation accelerator of a sulfenamide compound include N-cyclohexyl-2-benzothiazolyl sulfenamide, N,N-dicyclohexyl-2-benzothiazolyl sulfenamide, N-tert-butyl-2-benzothiazolyl sulfenamide, N-oxydiethylene-2-benzothiazolyl sulfenamide, N-methyl-2-benzothiazolyl sulfenamide, N-ethyl-2-benzothiazolyl sulfenamide, N-propyl-2-benzothiazolyl sulfenamide, N-butyl-2-benzothiazolyl sulfenamide, N-pentyl-2-benzothiazolyl sulfenamide, N-hexyl-2-benzothiazolyl sulfenamide, N-heptyl-2-benzothiazolyl sulfenamide, N-octyl-2-benzothiazolyl sulfenamide, N-2-ethylhexyl-2-benzothiazolyl sulfenamide, N-decyl-2-benzothiazolyl sulfenamide, N-dodecyl-2-benzothiazolyl sulfenamide, N-stearyl-2-benzothiazolyl sulfenamide, N,N-dimethyl-2-benzothiazolyl sulfenamide, N,N-diethyl-2-benzothiazolyl sulfenamide, N,N-dipropyl-2-benzothiazolyl sulfenamide, N,N-dibutyl-2-benzothiazolyl sulfenamide, N,N-dipentyl-2-benzothiazolyl sulfenamide, N,N-dihexyl-2-benzothiazolyl sulfenamide, N,N-diheptyl-2-benzothiazolyl sulfenamide, N,N-dioctyl-2-benzothiazolyl sulfenamide, N,N-di-2-ethylhexylbenzothiazolyl sulfenamide, N,N-didecyl-2-benzothiazolyl sulfenamide, N,N-didodecyl-2-benzothiazolyl sulfenamide, and N,N-distearyl-2-benzothiazolyl sulfenamide.

Among sulfenamide compounds, the vulcanisation accelerator more preferably contains at least N-cyclohexyl-2-benzothiazolyl sulfenamide.

The coating rubber composition to be used may appropriately contain components that are typically employed in rubber industries in addition to the rubber component, the carbon black, the silica, the silane coupling agent, and the vulcanisation accelerator described above, in a range that does not inhibit the object of the present invention. Examples of such other components include vulcanisation agents such as sulphur, fillers besides the carbon black and the silica, oil components such as process oil, vulcanisation accelerators, antioxidant, softening agents, zinc oxide, and stearic acid.

The rubber composition used in the present invention can be produced by kneading the components by an ordinary method and warming and extruding the kneaded mixture.

### [Metal cord-rubber composite]

The production of the metal cord-rubber composite of the present invention can be performed by optionally subjecting a metal cord, to which various surface treatment described above has been applied, to washing treatment by an ordinary method and then performing a process of adhering the metal cord and the rubber composition for coating described above.

By adhering the metal cord after undergoing the surface treatment described above and the rubber composition having the properties described above, for example, production can be performed by subjecting the metal cord and the rubber composition to vulcanisation adhesion under pressurised and heated conditions. The vulcanisation conditions are not particularly limited; however, the pressure is preferably 2 to 15 MPa, and more preferably 2 to 5 MPa, and the temperature is preferably 120 to 200°C, and more preferably 130 to 170°C. The vulcanisation time is not particularly limited but is preferably 3 minutes or longer but 60 hours or shorter.

In the metal cord-rubber composite of the present invention configured as described above, blending of the silica in addition to the carbon black as fillers suppresses heat build-up. Furthermore, the surface of the metal cord used in the present invention is activated by the triazole compound, and the vulcanisation adhesion by sulphur crosslinking is promoted. Furthermore, in the vulcanisation adhesion, the silica does not impair the adhesion.

For the metal cord-rubber composite of the present invention, the use is not particularly limited, and the metal cord-rubber composite can be widely used for various rubber products and components, such as tyres for common automobiles, industrial belts such as transmission belts and conveyor belts, rubber crawlers, hoses, and rubber supports for aseismic base isolation, in addition to heavy-duty tyres for trucks, buses, and construction machines.

The ply to which the metal cord-rubber composite is applied can be suitably used for a carcass ply of a tyre or a belt ply, and the rubber-metal composite can be suitably used for a bead of a tyre, for example. A tyre using the metal cord-rubber composite thereof is suitable for heavy-duty tyres for trucks, buses, and construction machines in addition to tyres for automobiles. Similarly, the metal cord-rubber composite is suitably used for industrial belts such as transmission belts and conveyor belts, rubber crawlers that are formed from rubber and that are mounted on crawler drive assembly used for bulldozers or the like, hoses, and rubber supports for aseismic base isolation. In the tyres including heavy-duty tyres, industrial belts, rubber crawlers, and the like, the rubber composition and the metal cord are less likely to be peeled off because of excellent adhesive strength between therebetween and crack growth resistance, and thus excellent durability and long life are achieved even though high load is applied.

### Example 1

Hereinafter, the present invention will be specifically described based on examples; however, the present invention is not limited by the examples thereof.

### [Example 1 and Comparative Examples 1 and 2]

### (Production of metal cord)

A steel cord having a 1 × 3 structure was prepared by twisting steel wires to which brass plating having a composition shown in Table 1 below (plating layer thickness: 0.2 µm, wire diameter: 0.3 mm). Then, the cord was subjected to treatment methods shown below, that are, washing using treatment 1: acetate buffer solution or phosphoric acid treatment solution and treatment 2: treatment solution formed from a corrosion inhibitor(triazole compound), and then dried at 50°C for 1 minute. For the steel cord after this washing treatment was completed, the N amount of the wire plating surface (outermost surface N amount: % by atom) and the Cu/Zn ratio of the outermost surface were measured by X-ray photoelectron spectroscope; manufactured by ULVAC-PHI, Inc., Quantera. The results are shown in Table 1 below.

Note that the measurement conditions by X-ray photoelectron spectroscopy are as described below.
X-ray source: monochromatised Al-Kα
Measurement region: 50 µmφ
Measurement peaks: C 1s, O 1s, N 1s, P 2p, Cu 2p_{3/2}, Zn 2p_{3/2}
Data processing: Multipak (manufactured by ULVAC-PHI, Inc.)
Quantification: quantification by using the relative sensitivity factor method based on the obtained peak areas *Cu/Zn is a ratio of quantitative values of Cu 2p_{3/2} to Zn 2p_{3/2}

### [Treatment 1: Treatment by acetate buffer solution or phosphoric acid treatment solution]

For the treatment by an acetate buffer solution, using a treatment solution in which pH of 0.1 N sodium acetate was adjusted to be a pH shown in Table 1 using acetic acid, the prepared steel cord was washed for a treatment time of 10 seconds to perform the surface treatment.

### [Treatment 2: Treatment by triazole compound]

For the treatment by a triazole compound, using a triazole compound aqueous solution in which a concentration of each triazole compound shown in Table 1 was adjusted to be a corresponding concentration, the prepared steel cord was washed for a treatment time of 10 seconds to perform the surface treatment.

Using the steel cord after the completion of the washing treatment, using a rubber composition having a composition shown in Table 1 below, the initial adhesiveness (shown in index), which was an evaluation of the cord/rubber adhesiveness, was evaluated by the following method. In addition, the low loss properties based on tan δ was also evaluated. These results are shown in Table 1 below.

### [Low loss property evaluation]

For the obtained vulcanisation rubber, the loss tangent;tan δ was measured by using a spectrometer, manufactured by Rheometrics, in the conditions where the temperature was 50°C, strain was 5%, and frequency was 15 Hz. The obtained value of tan δ was expressed as an index based on the value of Comparative Example 2 being taken as 100. A smaller index represents superior low loss properties and excellent low heat build-up.

### [Initial adhesiveness evaluation]

The initial adhesiveness represents a coating proportion of a metal by the rubber composition. For each sample, adhesiveness test was performed in accordance with ASTM-D-2229. After each sample was vulcanised in the conditions at 145°C for 30 minutes, after 30 minutes, the steel cord was pulled out from the rubber. The rubber covering conditions were visually observed and evaluated as 0 to 100% to use as an index of adhesiveness after short-time vulcanisation. The case where the metal surface was completely covered by the rubber composition was evaluated as 100, which was the maximum value.

**[Table 1]**

| | | **Example** | **Comparative Example** | |
|---|---|---|---|---|
| | | 1 | 1 | 2 |
| Metal Cord | N amount (% by atom) at surface | 14 | | 14 |
| | Cu/Zn ratio at surface | 1.8 | | 1.8 |
| | Treatment 1: acetate buffer (pH) | 6.6 | | 6.6 |
| | Treatment 2: triazole compound (concentration [g/L]) | 10 | | 10 |
| | Triazole compound | 1,2,4-triazole | | 1,2,4-triazole |
| | Plating component as bulk (weight ratio of Cu/Zn) | 63/37 | 63/37 | 63/37 |
| Coating rubber composition content (parts by mass) | Natural rubber | 80 | 80 | 80 |
| | Polyisoprene rubber *1 | 20 | 20 | 20 |
| | Carbon black (coarse particle) *2 | 45 | 45 | |
| | Carbon black (fine particle) *3 | | | 60 |
| | Silica (fine particle, 170m²/g or more for CTAB) *4 | 8 | 8 | |
| | Zinc oxide | 8 | 8 | 8 |
| | Antioxidant *5 | 2 | 2 | 2 |
| | Vulcanisation accelerator *6 | 1 | 1 | 1 |
| | Sulphur | 6 | 6 | 6 |
| | Fatty acid salt of cobalt *7 | 0 | 0.5 | 0 |
| Property | tan δ by index | 71 | 76 | 100 |
| | Initial adhesion by index | 100 | 95 | 100 |

| | | | | |
|---|---|---|---|---|
| In Table 1 above, *1 to *7 are as follows. *1: manufactured by JSR, trade name "IR2200" *2: manufactured by Tokai Carbon Co., Ltd., trade name "Seast 3" (CTAB: 80 m²/g) *3: manufactured by Tokai Carbon Co., Ltd., trade name "Seast 6" (CTAB: 115 m²/g) *4: manufactured by Tosoh Silica Corporation, "Nipsil KQ", CTAB specific surface area (measured value in accordance with ASTM D3765-92) : 230 m²/g *5: manufactured by Ouchi Shinko Chemical Industrial Co., Ltd., NOCRAC 6C, N-phenyl-N'-(1,3-dimethylbutyl)-p-phenylenediamine *6: manufactured by Ouchi Shinko Chemical Industrial Co., Ltd., NOCCELER DZ, N,N'-dicyclohexyl-2-benzothiazolyl sulfenamide *7: manufactured by OMG, Manobond C22.5, cobalt content: 22.5% by mass | | | | |

As shown in Table 1, the metal cord-rubber composite of Example 1 exhibited superior results for tan δ and initial adhesiveness evaluations to the initial adhesiveness evaluations of the metal cord-rubber composites of Comparative Examples 1 and 2 thereof.

### Industrial Applicability

The metal cord-rubber composite of the present invention is suitably used for tyres and conveyor belts, crawlers and hoses, and the like.

## Claims

1. A metal cord-rubber composite formed by coating a metal cord with a rubber composition **characterised by**,
an N atom, a Cu atom, and a Zn atom being present on a metal cord surface, the metal cord surface having 2% by atom or more and 60% by atom or less of N atoms and a Cu/Zn ratio of 1 or greater and 4 or less,
the rubber composition containing silica having a CTAB specific surface area of 170 m²/g or greater and carbon black,
a total blended amount of the silica and the carbon black being 35 parts by mass or more and 100 parts by mass or less, and a blending ratio of the silica relative to the total blended amount of the silica and the carbon black being 0.05 or greater and 0.5 or less.

2. The metal cord-rubber composite described in claim 1, wherein a content of cobalt is 1.0 part by mass or less per 100 parts by mass of a rubber component.

3. The metal cord-rubber composite described in claim 1 or 2, wherein a value of CTAB specific surface area of carbon black/CTAB specific surface area of silica is less than 0.5.

4. The metal cord-rubber composite described in any one of claims 1 to 3, wherein a CTAB specific surface area of the carbon black is 90 m²/g or less.

5. The metal cord-rubber composite described in any one of claims 1 to 4, wherein the rubber composition contains 0.05 parts by mass or more and 5.5 parts by mass or less of a bismaleimide compound.

6. The metal cord-rubber composite described in any one of claims 1 to 5, wherein the blending ratio of the silica based on the total blended amount of the silica and the carbon black is 0.05 or greater and 0.16 or less.

7. A belt or carcass for a tyre using the metal cord-rubber composite described in any one of claims 1 to 6.

8. A tyre using the metal cord-rubber composite described in any one of claims 1 to 6.
